# EUROPÄISCHE PATENTSCHRIFT

(11) **EP 4 019 361 B1**
(45) Veröffentlichungstag und Bekanntmachung des Hinweises auf die Patenterteilung: **30.10.2024**
(21) Anmeldenummer: 21213948.9
(22) Anmeldetag: 13.12.2021
(51) Int. Cl.: B61D 15/00, B61C 3/02, B60L 1/00, B60L 9/00, B60L 9/08, B60L 58/21, B60L 58/22, B60L 58/16, B60L 58/13, B60L 58/14, B60L 50/52, B60L 50/53, H02J 7/00

(54) **SCHIENENFAHRZEUG UND VERFAHREN ZUR DURCHFÜHRUNG EINES ARBEITSEINSATZES AUF EINER GLEISANLAGE**
RAILWAY VEHICLE AND METHOD FOR CARRYING OUT A WORKING INSERT ON A TRACK SYSTEM
VÉHICULE FERROVIAIRE ET PROCÉDÉ DE MISE EN OEUVRE D'UN TRAVAIL SUR UNE INSTALLATION DE VOIE

(30) Priorität: 22.12.2020 AT 511212020
(43) Veröffentlichungstag der Anmeldung: 29.06.2022
(73) Patentinhaber: Plasser & Theurer Export von Bahnbaumaschinen Gesellschaft m.b.H., 1010 Wien (AT)
(72) Erfinder: WEITERSBERGER, Christian, 4222 St. Georgen an der Gusen (AT); HOFER, Andreas, 4121 Altenfelden (AT); KRENN, Stefan, 4163 Klaffer am Hochficht (AT)

(56) Entgegenhaltungen:
- WO-A1-2014/149823
- WO-A1-2015/124161
- WO-A1-2017/137165
- WO-A1-2018/210533
- DE-A1- 102013 207 952
- DE-A1- 102015 216 097
- US-A1- 2013 167 752
- US-A1- 2014 049 408

## Beschreibung

### Technisches Gebiet

Die Erfindung betrifft ein Schienenfahrzeug zur Durchführung eines Arbeitseinsatzes auf einer Gleisanlage, mit einem auf Schienenfahrwerken abgestützten Fahrzeugrahmen, mit einem mittels Arbeitsantrieben verstellbaren Arbeitsgerät, mit einem Elektromotor als Fahrantrieb und mit einem elektrischen Energiespeicher, der mehrere aufladbare Batteriezellen umfasst. Zudem betrifft die Erfindung ein Verfahren zum Betreiben des Schienenfahrzeugs.

### Stand der Technik

Ein gattungsgemäßes Schienenfahrzeug ist aus der AT 16396 U1 bekannt. Bei einem solchen Schienenfahrzeug werden sowohl ein Fahrantrieb als auch Arbeitsgeräte mittels elektrischer Energie versorgt. Die für Bau- und Instandhaltungsarbeiten eigensetzten Arbeitsgeräte haben einen hohen Energiebedarf. Eine gleichzeitige Versorgung des Fahrantriebs und der Arbeitsgeräte aus einem elektrischen Energiespeicher ist somit nur für die Dauer eines Arbeitseinsatzes vorgesehen.

US 2013/167752 A1 offenbart ein Schienenfahrzeug mit Elektroantrieb und mit einem elektrischen Energiespeicher, der mehrere aufladbare Batteriezellen in parallel schaltbaren Batteriesträngen umfasst.

Während einer Überstellfahrt wird das Schienenfahrzeug mittels eines Verbrennungsmotors angetrieben. Dabei besteht die Möglichkeit, den Energiespeicher über einen Generator aufzuladen. Alternativ dazu ist der elektrische Energiespeicher an eine elektrische Einspeisevorrichtung anschließbar. Bei vorhandener Oberleitung ist auch ein Stromabnehmer zum Aufladen des elektrischen Energiespeichers nutzbar.

### Darstellung der Erfindung

Der Erfindung liegt die Aufgabe zugrunde, ein Schienenfahrzeug der eingangs genannten Art dahingehend zu verbessern, dass der elektrische Energiespeicher auf effiziente und schonende Weise nutzbar ist. Insbesondere sollen ein emissionsfreier Betrieb des Schienenfahrzeugs innerhalb eines breiten Leistungsbereichs möglich sein. Weiter ist es eine Aufgabe der Erfindung, ein entsprechendes Verfahren zum Betreiben des Schienenfahrzeugs anzugeben.

Erfindungsgemäß werden diese Aufgaben gelöst durch die Merkmale der unabhängigen Ansprüche 1 und 8. Abhängige Ansprüche geben vorteilhafte Ausgestaltungen der Erfindung an.

Dabei sind die Batteriezellen in der Weise in mehreren parallel schaltbaren Batteriesträngen angeordnet, dass jeder Batteriestrang mittels eines zugeordneten Schaltmoduls zur Versorgung des Elektromotors freischaltbar ist, wobei jedes Schaltmodul mit einer zentralen Steuerungseinrichtung gekoppelt ist, um den jeweiligen Batteriestrang in Abhängigkeit einer Betriebsgröße freizuschalten.

Zum einen stellt die Anordnung mehrerer Batteriestränge (stacks) in einer Parallelschaltung sicher, dass für eine Überstellfahrt auch dann genügend Energie zur Verfügung steht, wenn lange Steigungen zu überwinden sind. Zum anderen sind die Batteriestränge mittels der Steuerungseinrichtung über die Schaltmodule selektiv freischaltbar. Damit wird erreicht, dass die Batteriezellen in Abhängigkeit einer aktuellen Betriebsgröße eingesetzt werden. Bei vermindertem Energiebedarf werden die Batteriestränge gestaffelt genutzt, um die Akkukapazität des jeweiligen Strangs bestmöglich auszunutzen. Auf diese Weise werden auch bei geringerem Energieverbrauch in den einzelnen Batteriesträngen hohe Zyklentiefen erreicht, die einer Alterung der Batteriezellen entgegenwirken.

In einer vorteilhaften Weiterbildung ist jede Batteriezelle als Lithium-Ionen-Zelle, insbesondere mit einer positiven Elektrode aus Lithiumtitanat, ausgebildet. Auch bei solchen Batteriezellen mit sehr flacher Ladekurve (über einen weiten Bereich des Betriebsladezustands wird mit nahezu gleichbleibender Spannung geladen bzw. entladen) haben Versuche bei fortwährend geringen Zyklentiefen ein Alterungseffekt gezeigt. Konkret kommt es zu einem Memoryeffekt mit einer leichten Anhebung der Ladespannung bei dem Betriebsladezustand, bis zu dem mit geringen Zyklustiefen wiederholt aufgeladen wurde. In weiterer Folge interpretiert eine Ladeelektronik die Abweichung der Ladespannung von der ursprünglichen Ladekurve als vollständige Ladung und bricht den Ladevorgang frühzeitig ab. Dieser Memory-Effekt wird mit der vorliegenden Erfindung verhindert. Zudem ist ein bereits verursachter Memory-Effekt reversibel, indem ein betroffener Batteriestrang längere Zeit entladen und nicht freischaltet wird.

Vorteilhafterweise umfasst der elektrische Energiespeicher ein Batteriemanagementsystem, mittels dem für jeden Batteriestrang ein aktueller Betriebsladezustand erfassbar ist, wobei der jeweilige Betriebsladezustand der zentralen Steuerungseinrichtung als Betriebsgröße zugeführt ist. Bei dieser Weiterbildung der Erfindung wird der jeweilige Batteriestrang in Abhängigkeit des aktuellen Betriebsladezustands freigeschaltet.

Dabei ist in einer einfachen Variante eine Anzeigeeinheit angeordnet, mittels derer der Betriebsladezustand des jeweiligen Batteriestrangs anzeigbar ist, wobei eine Bedieneinheit angeordnet ist, mittels derer das jeweilige Schaltmodul ansteuerbar ist. Auf diese Weise kann eine Bedienperson die aktuellen Betriebsladezustände der Batteriestränge überprüfen und bei Bedarf einzelne Batteriestränge freischalten, deaktivieren oder in einen Lademodus versetzen.

Ergänzend oder alternativ dazu ist es sinnvoll, wenn in der Steuerungseinrichtung ein Aktivierungsalgorithmus eingerichtet ist, um die Batteriestränge in einer vorgegebenen Abfolge freizuschalten. Dabei verarbeitet der Aktivierungsalgorithmus entsprechende Kenngrößen der Betriebsladezustände in der Weise, dass jeder Batteriestrang mit einer hohen Zyklustiefe betrieben wird. Somit sind zur gleichen Zeit ein Batteriestrang oder mehrere Batteriestränge freigeschaltet und die übrigen Batteriestränge deaktiviert oder im Auflademodus.

In einer Weiterbildung ist der Elektromotor über einen Traktionsumrichter mit dem Energiespeicher gekoppelt, wobei der Traktionsumrichter über eine Transformatorschaltung und einen Stromabnehmer an eine Oberleitung schaltbar ist. Das Gleisfahrzeug ist dann sowohl aus dem elektrischen Energiespeicher als auch aus einer vorhandenen Oberleitung mit Energie versorgbar. Bei dieser Erweiterung wird gegebenenfalls Energie aus der Oberleitung zum Laden der einzelnen Batteriestränge genutzt.

Dabei ist es von Vorteil, wenn die Transformatorschaltung mehrere Transformatoren umfasst, um unterschiedliche Versorgungsspannungen in eine Betriebsspannung umzuwandeln. Damit werden die Einsatzmöglichkeiten des Schienenfahrzeugs erhöht, indem unterschiedliche Oberleitungsspannungen genutzt werden können.

In einer weiteren Verbesserung sind die Arbeitsantriebe über einen Hilfsumrichter mit dem Energiespeicher gekoppelt. Der Energiespeicher ist dann als einzige Energiequelle während eines Arbeitsbetriebs einsetzbar. Als Betriebsgröße kann dabei der aktuelle Gesamtverbrauch der Arbeitsantriebe und des Fahrantriebs vorgegeben werden.

Um die Einsatzmöglichkeiten des Schienenfahrzeugs zusätzlich zu erweitern ist es sinnvoll, wenn ein mit einem Verbrennungsmotor gekoppelter Generator zur Versorgung des Elektromotors und/oder eines weiteren Elektroantriebsmotors angeordnet ist. Mit dieser Hybridlösung steht eine zusätzliche Energiequelle zur Verfügung. Beispielsweise liefert die Motor-Generator-Anordnung bei Überstellfahrten eine Grundleistung und der Energiespeicher sorgt bei Beschleunigungsphasen oder Bergauffahrten für zusätzliche Leistung. Zudem ist die Motor-Generator-Anordnung zum Laden des Energiespeichers nutzbar.

Das Erfindungsgemäße Verfahren zum Betreiben des beschriebenen Schienenfahrzeugs sieht vor, dass der jeweilige Batteriestrang in Abhängigkeit einer Betriebsgröße mittels der zentralen Steuerungseinrichtung freigeschaltet wird. Damit ist sichergestellt, dass jeder Batteriestrang mit einer hohen Zyklustiefe betrieben wird.

Vorteilhafterweise wird für jeden Batteriestrang mittels eines Batteriemanagementsystems ein aktueller Betriebsladezustand erfasst, wobei die Betriebsladezustände als Betriebsgrößen der zentralen Steuerungseinrichtung übermittelt werden. Der jeweilige Batteriestrang wird dabei auf effiziente und schonende Weise entsprechend des aktuellen Betriebsladezustands genutzt.

In einer einfachen Ausprägung des Verfahrens wird der Betriebsladezustand des jeweiligen Batteriestrangs mittels einer Anzeigeeinheit der zentralen Steuerungseinrichtung angezeigt, wobei der jeweilige Batteriestrang mittels einer Bedieneinheit der zentralen Steuerungseinrichtung freigeschaltet wird. Auf diese Weise ist eine Freischaltung einzelner Batteriestränge jederzeit durch eine Bedienperson durchführbar.

Eine vorteilhafte Weiterbildung sieht vor, dass während eines Betriebs des Schienenfahrzeugs in einer ersten Phase der Elektromotor aus einem ersten Batteriestrang versorgt und dabei der Betriebsladezustand der zugeordneten Batteriezellen laufend mit einem Schwellenwert verglichen wird und dass ab Erreichung des Schwellenwerts der Elektromotor aus einem anderen Batteriestrang versorgt wird. Auf diese Weise ist eine automatisierte zyklische Nutzung aller Batteriestränge sichergestellt.

Des Weiteren ist es von Vorteil, wenn für jeden Batteriestrang eine Betriebszeit als aktuelle Betriebsgröße erfasst wird und wenn für die Batteriestränge eine Freischaltreihenfolge in Abhängigkeit der erfassten Betriebszeiten vorgegeben wird. Mit dieser Erweiterung werden die Betriebszeiten der jeweiligen Batteriestränge ausgeglichen. Das verhindert eine ungleichmäßige Alterung der Batteriezellen. Zusätzlich können weitere Parameter zur Alterung aufgezeichnet werden, um Alterungserscheinungen auszugleichen.

Eine weitere Verbesserung sieht vor, dass Kennwerte der aktuellen Betriebsladezustände der Batteriestränge mittels eines in der zentralen Steuerungseinrichtung eingerichteten Aktivierungsalgorithmus verarbeitet werden und dass der Aktivierungsalgorithmus eine Abfolge vorgibt, mit welcher der jeweilige Batteriestrang automatisiert freigeschaltet wird. Dabei kann auch maschinelles Lernen zum Einsatz kommen, um den Aktivierungsalgorithmus laufend zu verbessern.

Optimiert wird das Verfahren durch einen weiteren Verfahrensschritt, bei dem der zentralen Steuerungseinrichtung als Betriebsgröße ein Kennwert für eine zu befahrende Gleisstrecke, insbesondere eine durchschnittliche Steigung, vorgegeben wird, wobei mittels der zentralen Steuerungseinrichtung eine vom Kennwert abhängige Anzahl an Batteriesträngen freigeschaltet wird. Die Freischaltung der Batteriestränge wird auf diese Weise vorab an ein Streckenprofil der zu befahrenden Gleisstrecke angepasst.

Bei hügeligen Gleisstrecken und Gebirgsstrecken wird der Energiespeicher vorteilhafterweise während einer Bergabfahrt über den generatorisch betriebenen Elektromotor aufgeladen. Die gewonnene Energie steht dann für eine nächste Steigung zur Verfügung. Dabei kommen bei starken Steigungen mehrere Batteriestränge gleichzeitig zum Einsatz. Bei hügeligen Strecken mit geringen Steigungen ist hingegen nur ein Batteriestrang aktiv, um hohe Zyklentiefen sicherzustellen.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
Fig. 1 Schienenfahrzeug in einer Seitenansicht
Fig. 2 Blockschaltbild des Antriebssystems
Fig. 3 Energiespeicher mit einem Umrichter pro Batteriestrang
Fig. 4 Energiespeicher mit einem gemeinsamen Umrichter
Fig. 5 Ladezyklus
Fig. 6 Einsatzszenario mit starken Steigungen
Fig. 7 Einsatzszenario mit flachen Steigungen
Fig. 8 Flussdiagramm der gestaffelten Batteriestrangnutzung

### Beschreibung der Ausführungsformen

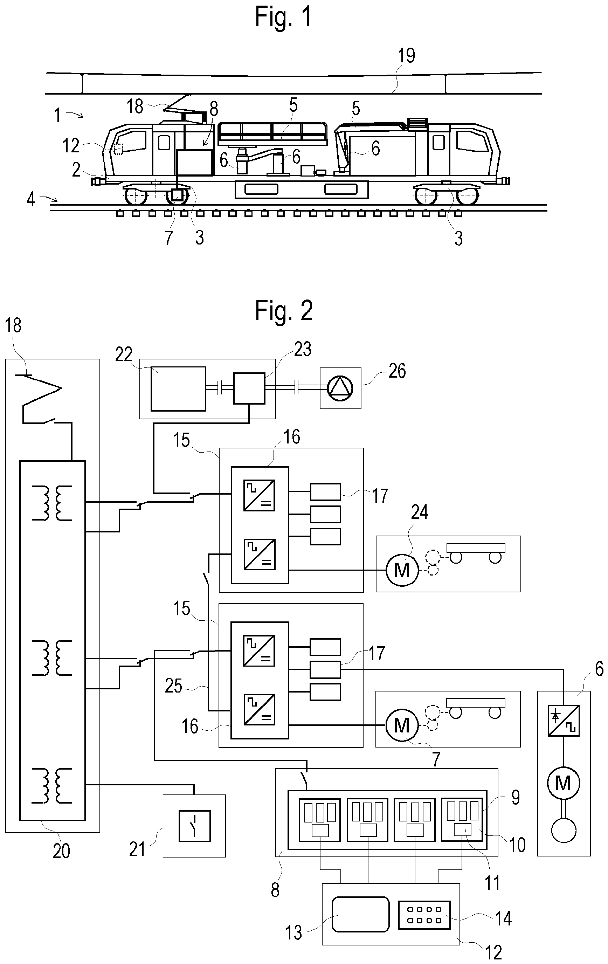

Das Schienenfahrzeug 1 in Fig. 1 umfasst einen Fahrzeugrahmen 2, der auf Schienenfahrwerken 3 auf einem Gleis 4 verfahrbar ist. Auf dem Fahrzeugrahmen 2 sind als beispielhafte Arbeitsgeräte 5 eine Hubarbeitsbühne und ein Kran angeordnet. Es können auch Arbeitsgeräte 5 zur Gleisbearbeitung zum Einsatz kommen, beispielsweise ein Stopfaggregat, ein Hebe-/Richtaggregat oder ein Stabilisationsaggregat. Jedes dieser Arbeitsgeräte 5 ist mittels Arbeitsantriebe 6 verstellbar.

Als Fahrantrieb ist ein Elektromotor 7 angeordnet, der aus einem elektrischen Energiespeicher 8 mit Energie versorgt wird. Der Energiespeicher 8 umfasst mehrere Batteriezellen 9, die in mehreren Batteriesträngen 10 parallel schaltbar sind (Fig. 2). Zudem umfasst der Energiespeicher 8 ein Batteriemanagementsystem, mittels dem für jeden Batteriestrang 10 ein aktueller Betriebsladezustand SOC (state of charge) erfassbar ist.

Die Gesamtkapazität aller Batteriestränge 10 ist für alle vorgesehenen Einsatzszenarien des Schienenfahrzeugs 1 ausgelegt. Insbesondere sind Überstellfahren des Schienenfahrzeugs 1 von einer Baustelle zur nächsten mit alleiniger Versorgung aus dem elektrischen Energiespeicher 8 möglich.

Die Batteriezellen 9 sind vorteilhafterweise Lithium-Ionen-Zellen, insbesondere mit einer positiven Elektrode aus Lithiumtitanat (LTO-Anode). Gegenüber Graphit-Anoden weisen diese Zellen eine weitaus geringere Alterungsneigung auf. Zudem besteht eine hohe chemische und thermische Stabilität, wodurch ein sicherer Einsatz des Schienenfahrzeugs 1 gewährleistet ist.

Als weiteren Vorteil weist eine Lithium-Ionen-Zelle eine flache Spannungskennlinie (Ladekurve) auf, wodurch eine hohe Leistungskonstanz über den gesamten Bereich des Betriebsladezustands SOC besteht. Jede Zelle wird über das Batteriemanagementsystem mit einer Steuerungselektronik und einer Thermomanagementeinrichtung überwacht. Der jeweilige aktuell erfasste Betriebsladezustand SOC wird in Prozent angegeben. Eine Batterie ist voll geladen, wenn der Betriebsladezustand SOC bei 100% liegt. 0% ist der niedrigste erreichbare Wert.

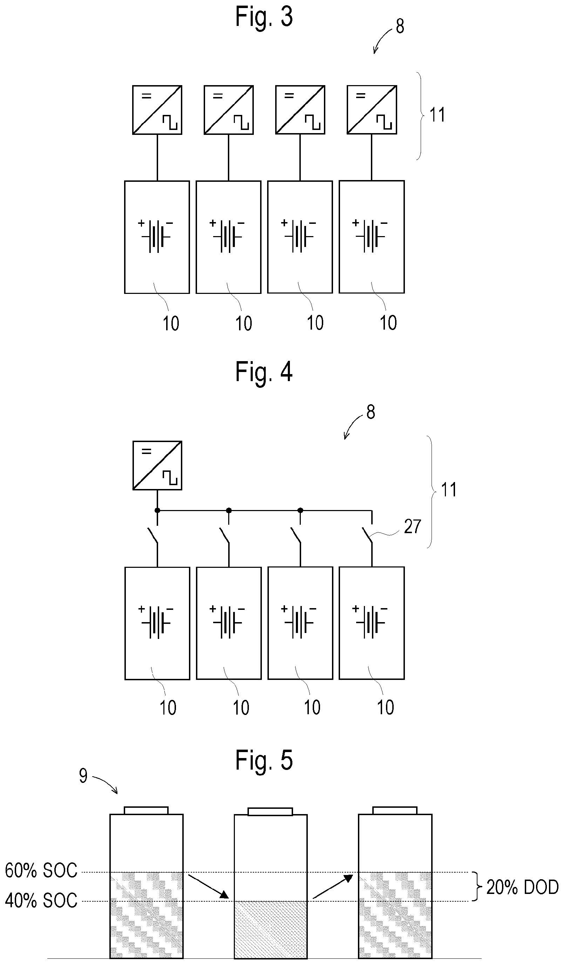

In diesem Zusammenhang ist die zyklische Alterung der jeweiligen Batteriezelle zu beachten. Ein äquivalenter Vollzyklus wird erreicht, wenn der Betriebsladezustand von 100% auf 0% sinkt und wieder auf 100% steigt. Das entspricht einer maximal erreichbaren Zyklustiefe DOD (Depth of Discharge) von 100%. In Fig. 5 ist ein Ladezyklus mit einer niedrigen Zyklustiefe DOD von 20% dargestellt.

Erfindungsgemäß umfasst jeder Batteriestrang 10 zur Beeinflussung der Zyklustiefen DOD ein Schaltmodul 11, mittels dem über eine zentrale Steuerungseinrichtung 12 der entsprechende Batteriestrang 10 in Abhängigkeit einer aktuellen Betriebsgröße freischaltbar ist. Als jeweilige Betriebsgröße werden vorteilhafterweise der aktuelle Betriebsladezustand SOC oder eine kumulierte Betriebszeit des jeweiligen Batteriestrangs 10, ein prognostizierter Energieverbrauch oder ein Kennwert für ein zu befahrendes Streckenprofil herangezogen.

In der dargestellten Variante umfasst die zentrale Steuerungseinrichtung 12 eine Anzeigeeinheit 13, mittels derer die Betriebsladezustände SOC der einzelnen Batteriestränge 10 dargestellt werden. Mittels einer Bedieneinheit 14 ist das jeweilige Schaltmodul 11 ansteuerbar.

Sobald ein Batteriestrang 10 freigeschaltet ist, erfolgt eine Entladung durch den Elektromotor 7 und gegebenenfalls durch sonstige elektrische Verbraucher 6. Unabhängig davon ist jeder Batteriestrang 10 über ein entsprechendes Ladegerät aufladbar. Dabei sind für einen Ladevorgang mehrere Energiequellen nutzbar. Im Betrieb erfolgen beispielsweise zyklische Ladevorgänge durch einen generatorischen Betrieb des Elektromotors 7 während eines Bremsvorgangs.

In Fig. 2 sind weitere Komponenten und Versorgungseinheiten dargestellt. Beispielsweise umfasst das Schienenfahrzeug 1 zwei Antriebseinheiten. Eine erste Antriebseinheit umfasst den Elektromotor 7 mit zugeordneter Leistungselektronik 15. Konkret ist der Elektromotor 7 über einen Traktionsumrichter 16 an den elektrischen Energiespeicher 8 schaltbar. An die Leistungselektronik 15 sind diverse Zusatzeinrichtungen 17 wie zum Beispiel ein Hilfsbetriebsumrichter anschließbar. Dieser versorgt beispielsweise die elektrischen Arbeitsantriebe 6.

Am Dach des Schienenfahrzeugs 1 ist ein Stromabnehmer 18 angeordnet. Bei aktiver Oberleitung 19 versorgt der Stromabnehmer 18 den Elektromotor 7 über eine Transformatorschaltung 20. Dabei besteht die Möglichkeit, zwischen verschiedenen Oberleitungsspannungen (z.B. 15 und 25 kV) umzuschalten. Geschlossen wird der Stromkreis über Erdungsmodule 21.

Bei fehlender Oberleitungsversorgung ist ein Hybridantrieb möglich. Dazu ist ein Verbrennungsmotor 22 mit einem Generator 23 gekoppelt. Mittels dieser Motor-Generotoreinheit ist eine zweite Antriebseinheit mit elektrischer Energie versorgbar. Die zweite Antriebseinheit umfasst einen weiteren Elektroantriebsmotor 24. Über eine Verbindungsleitung 25 sind die beiden Antriebeinheiten gekoppelt. Auf diese Weise ist auch der elektrische Energiespeicher 8 mittels des Generators 23 aufladbar. Bei rein elektrischem Betrieb ist der Generator 23 motorisch betreibbar, um eine Hydraulikpumpe 26 zur Versorgung hydraulischer Arbeitsantriebe anzutreiben. Dabei ist der Verbrennungsmotor 22 abgeschaltet und der Generator 23 vom Verbrennungsmotor 22 entkuppelt.

In den Figuren 3 und 4 sind zwei unterschiedliche Aufbauten des elektrischen Energiespeichers 8 dargestellt. Die Topologie in Fig. 3 zeigt eine Anordnung mit separaten Umrichtern. Konkret umfasst jedes Schaltmodul 11 einen Umrichter, um den zugeordneten Batteriestrang 10 parallel zu schalten. In Fig. 4 ist eine Topologie mit einem gemeinsamen Umrichter dargestellt. Hier umfasst das jeweilige Schaltmodul 11 eine entsprechende Schalteinheit 27, um den zugeordneten Batteriestrang 10 freizuschalten. Der jeweilige Umrichter ist vorteilhaferweise mit einem für den verwendeten Batteriezellentyp ausgelegten Ladegerät kombiniert.

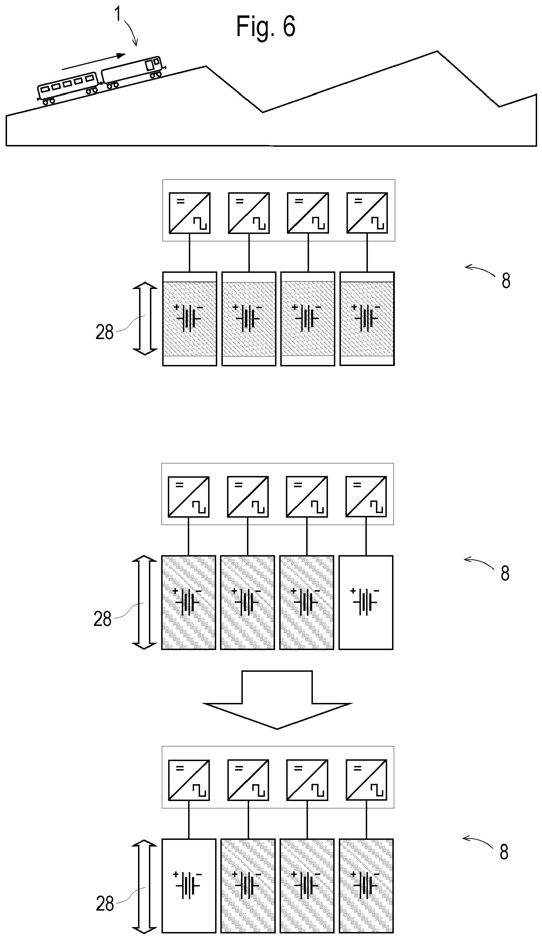

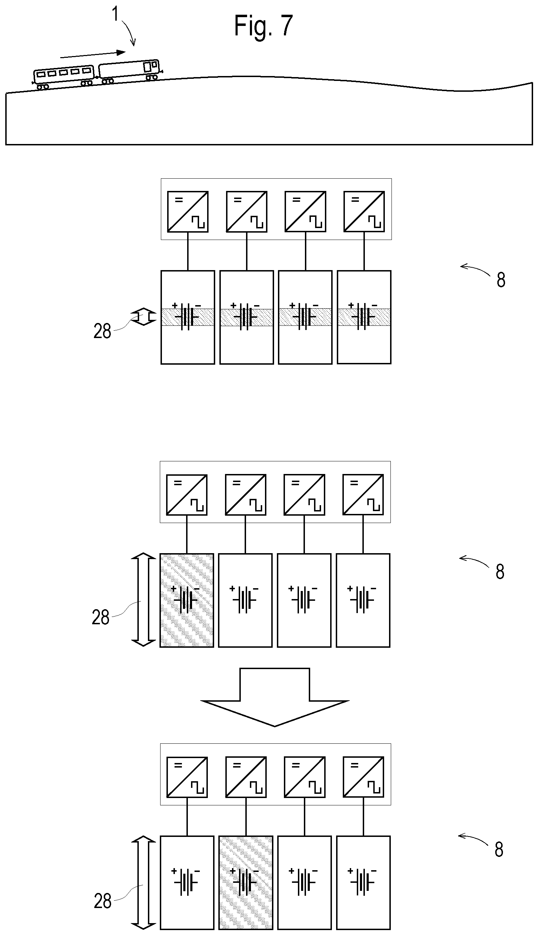

Verschiedene beispielhafte Betriebsszenarien werden anhand der Figuren 6 und 7 erläutert. Dabei ist die Motor-Generator-Einheit in Betrieb und der elektrische Energiespeicher 8 fungiert als Booster bei einer Bergauffahrt und während einer Beschleunigungsphase. Bei einer Bergabfahrt oder während einer Verzögerungsphase erfolgt eine Aufladung des elektrischen Energiespeichers 8 durch den generatorisch betriebenen Elektromotor 7.

Fig. 6 zeigt den Betrieb des Schienenfahrzeugs 1 auf einer gebirgigen Gleisstrecke. Das oberste Bild zeigt die Abfolge von steilen Abschnitten mit einer resultierenden großen durchschnittlichen Steigung. Im Blockschaltbild darunter ist die Anordnung gemäß Fig. 3 ohne Anwendung der erfindungsgemäßen Lösung dargestellt. Alle Batteriestränge 10 sind aktiv und werden innerhalb eines limitierten Bereichs 28 des Betriebsladezustands SOC betrieben. Die entsprechend niedrigen Zyklustiefen DOD können Alterungseffekte der Batteriezellen 9 hervorrufen.

Vermieden werden diese Effekte durch den erfindungsgemäßen Betrieb, der in den beiden Blockschaltbildern darunter veranschaulicht ist. Es erfolgt ein Ausgleich bei der Nutzung der Batteriestränge 10 (stack balancing). Um auf den steilen Anstiegen den Energiebedarf zu decken, sind drei der vier Batteriestränge 10 freigeschaltet. Dabei wird der volle Bereich 28 der möglichen Betriebsladezustände SOC genutzt. Anders ausgedrückt erfolgt eine wesentlich bessere Ausnutzung der Batteriekapazität (Akkukapazität). Durch die hohen Zyklustiefen DOD werden Alterungseffekte vermieden.

In einer ersten Periode sind die ersten drei Batteriestränge 10 aktiv. In einer zweiten Periode wird ein Batteriestrang 10 abgeschaltet und der weitere Batteriestrang 10 freigeschaltet. Dabei werden die Betriebszeiten der einzelnen Batteriestränge 10 in der zentralen Steuerungseinrichtung 12 aufgezeichnet und durch eine vorgegebene Abfolge der Freischaltungen ausgeglichen.

Die Wirkung der erfindungsgemäßen Routine zur gestaffelten Freischaltung wird verstärkt, wenn der Energiebedarf sinkt. In Fig. 7 ist ein entsprechend flaches Fahrprofil dargestellt. Hier ergibt sich aufgrund der geringeren Steigungen ein sehr eingeschränkter Bereich 28 der nutzbaren Batteriekapazität, wenn alle Batteriestränge 10 gleichzeitig aktiv sind. Erfindungsgemäß werden deshalb in aufeinanderfolgenden Perioden unterschiedliche Batteriestränge 10 freigeschaltet. Dabei wird während einer Periode die maximale Batteriekapazität mit entsprechend hohen Zyklustiefen DOD genutzt.

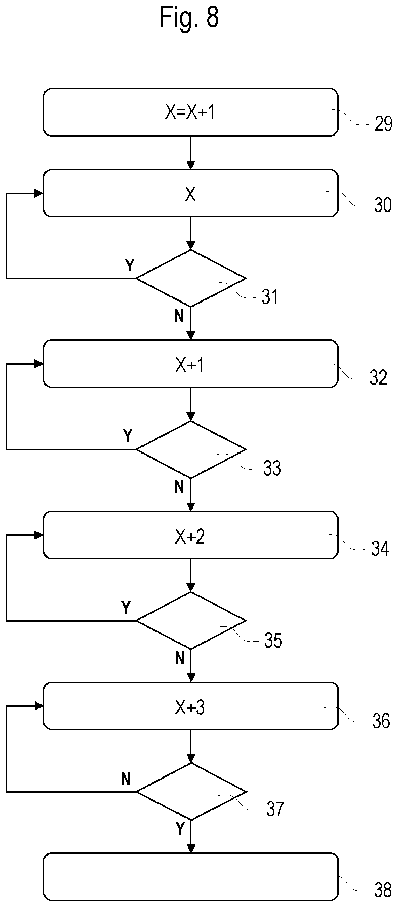

In der zentralen Steuerungseinrichtung 12 ist beispielsweise eine Routine gemäß Fig. 8 eingerichtet. Dabei sind die vorhandenen Batteriestränge 10 durchnummeriert. In der Steuerungseinrichtung 12 ist die Nummer X des zuletzt genutzte Batteriestrangs 10 abgespeichert. Am Start 29 eines neuerlichen Betriebs des Schienenfahrzeugs 1 wird der nächste Batteriestrang 10 freigeschaltet (X=X+1). Daraufhin wird in einer ersten Phase (Periode) 30 Energie aus dem entsprechenden Batteriestrang 10 gezogen.

Der Betriebsladezustand SOC wird laufend erfasst und es erfolgt eine Überprüfung 31, ob die Energie im betreffenden Batteriestrang 10 noch ausreicht. Bei positiver Entscheidung Y bleibt der Batteriestrang 10 weiterhin freigeschaltet.

Sobald der Betriebsladezustand SOC des freigeschalteten Batteriestrangs 10 eine untere Grenze erreicht (negative Entscheidung N), beginnt eine zweite Phase 32. Dabei wird die benötigte Energie aus dem nächsten Batteriestrang 10 gezogen (X+1). Es erfolgt eine erneute Überprüfung 33 ob die Energie im aktuell freigeschalteten Batteriestrang 10 noch ausreicht. Währenddessen wird der zuvor freigeschaltete Batteriestrang 10 wieder aufgeladen. Dieser Vorgang wiederholt sich in einer dritten Phase 34 mit dem nächsten Batteriestrang 10 (X+2) und einer weiteren Überprüfung 35, ob die Energie im aktuell freigeschalteten Batteriestrang 10 noch ausreicht.

Bei aufrechtem Betrieb wird in einer nächsten Phase 36 ein weiterer Batteriestrang 10 gestaffelt freigeschaltet (X+3). In einer eigenen Abfrage 37 registriert die ablaufende Routine, ob der Betrieb bzw. die Fahrt beendet wird. Bei positiver Entscheidung Y wird die Routine abgeschossen und die Nummer des zuletzt genutzten Batteriestrangs 10 abgespeichert. Damit ist ein Ende 38 des Betriebs erreicht.

## Patentansprüche

1. Schienenfahrzeug (1) mit einem auf Schienenfahrwerken (3) abgestützten Fahrzeugrahmen (2), mit einem Elektromotor (7) als Fahrantrieb und mit einem elektrischen Energiespeicher (8), der mehrere aufladbare Batteriezellen (9) in parallel schaltbaren Batteriesträngen umfasst, **dadurch gekennzeichnet, dass** ein mittels Arbeitsantrieben (6) verstellbares Arbeitsgerät (5) zur Durchführung eines Arbeitseinsatzes auf einer Gleisanlage angeordnet ist, dass die Batteriezellen (9) in der Weise in mehreren parallel schaltbaren Batteriesträngen (10) angeordnet sind, dass jeder Batteriestrang (10) mittels eines zugeordneten Schaltmoduls (11) zur Versorgung des Elektromotors (7) freischaltbar ist und dass jedes Schaltmodul (11) mit einer zentralen Steuerungseinrichtung (12) gekoppelt ist, um den jeweiligen Batteriestrang (10) in Abhängigkeit einer aktuellen Betriebsgröße gestaffelt in aufeinanderliegenden Perioden freizuschalten, damit auch bei geringem Energieverbrauch in den einzelnen Batteriesträngen (10) hohe Zyklentiefen (28) erreicht werden, die einer Alterung der Batteriezellen (9) entgegenwirken; wobei während jeder Periode die maximale Batteriekapazität und entsprechend hohe Zyklustiefen für unterschiedliche Batteriestränge genutzt werden.

2. Schienenfahrzeug (1) nach Anspruch 1, **dadurch gekennzeichnet, dass** jede Batteriezelle (9) als Lithium-Ionen-Zelle, insbesondere mit einer positiven Elektrode aus Lithiumtitanat, ausgebildet ist.

3. Schienenfahrzeug (1) nach Anspruch 1 oder 2, **dadurch gekennzeichnet, dass** der elektrische Energiespeicher (8) ein Batteriemanagementsystem umfasst, mittels dem für jeden Batteriestrang (10) ein aktueller Betriebsladezustand (SOC) erfassbar ist und dass der jeweilige Betriebsladezustand (SOC) der zentralen Steuerungseinrichtung (12) als Betriebsgröße zugeführt ist.

4. Schienenfahrzeug (1) nach Anspruch 3, **dadurch gekennzeichnet, dass** eine Anzeigeeinheit (13) angeordnet ist, mittels derer der Betriebsladezustand (SOC) des jeweiligen Batteriestrangs (10) anzeigbar ist, und dass eine Bedieneinheit (14) angeordnet ist, mittels derer das jeweilige Schaltmodul (11) ansteuerbar ist.

5. Schienenfahrzeug (1) nach einem der Ansprüche 1 bis 4, **dadurch gekennzeichnet, dass** in der Steuerungseinrichtung (12) ein Aktivierungsalgorithmus eingerichtet ist, um die Batteriestränge (10) in einer vorgegebenen Abfolge freizuschalten.

6. Schienenfahrzeug (1) nach einem der Ansprüche 1 bis 5, **dadurch gekennzeichnet, dass** das Schienenfahrzeug weiterhin einen Traktionsumrichter (16), eine Transformatorschaltung (20) und einen Stromabnehmer (18) umfasst; und dass der Elektromotor (7) über den Traktionsumrichter (16) mit dem Energiespeicher (8) gekoppelt ist und dass der Traktionsumrichter (16) über die Transformatorschaltung (20) und den Stromabnehmer (18) an eine Oberleitung (19) schaltbar ist.

7. Schienenfahrzeug (1) nach einem der Ansprüche 1 bis 6, **dadurch gekennzeichnet, dass** das Schienenfahrzeug einen Verbrennungsmotor (22) und einen mit dem Verbrennungsmotor (22) gekoppelten Generator (23) zur Versorgung des Elektromotors (7) und/oder eines weiteren Elektroantriebsmotors (24) des Schienenfahrzeugs umfasst.

8. Verfahren zum Betreiben eines Schienenfahrzeugs (1) nach einem der Ansprüche 1 bis 7, **dadurch gekennzeichnet, dass** der jeweilige Batteriestrang (10) in Abhängigkeit einer aktuellen Betriebsgröße mittels der zentralen Steuerungseinrichtung (12) gestaffelt in aufeinanderliegenden Perioden freigeschaltet wird, damit auch bei geringem Energieverbrauch in den einzelnen Batteriesträngen (10) hohe Zyklentiefen (28) erreicht werden, die einer Alterung der Batteriezellen (9) entgegenwirken; wobei während jeder Periode die maximale Batteriekapazität und entsprechend hohe Zyklustiefen für unterschiedliche Batteriestränge genutzt werden.

9. Verfahren nach Anspruch 8, **dadurch gekennzeichnet, dass** für jeden Batteriestrang (10) mittels eines Batteriemanagementsystems ein aktueller Betriebsladezustand (SOC) erfasst wird und dass die Betriebsladezustände (SOC) als Betriebsgrößen der zentralen Steuerungseinrichtung (12) übermittelt werden.

10. Verfahren nach Anspruch 8 oder 9, **dadurch gekennzeichnet, dass** der Betriebsladezustand (SOC) des jeweiligen Batteriestrangs (10) mittels einer Anzeigeeinheit (13) angezeigt wird und dass der jeweilige Batteriestrang (10) mittels einer Bedieneinheit (14) freigeschaltet wird.

11. Verfahren nach einem der Ansprüche 8 bis 10, **dadurch gekennzeichnet, dass** während eines aufrechten Betriebs des Schienenfahrzeugs (1) in einer ersten Phase der Elektromotor (7) aus einem ersten Batteriestrang (10) versorgt und dabei der Betriebsladezustand (SOC) der zugeordneten Batteriezellen (9) laufend mit einem Schwellenwert verglichen wird und dass ab Erreichung des Schwellenwerts der Elektromotor (7) aus einem anderen Batteriestrang (10) versorgt wird.

12. Verfahren nach einem der Ansprüche 8 bis 11, **dadurch gekennzeichnet, dass** für jeden Batteriestrang (10) eine Betriebszeit erfasst wird und dass für die Batteriestränge (10) eine Freischaltreihenfolge in Abhängigkeit der erfassten Betriebszeiten vorgegeben wird.

13. Verfahren nach einem der Ansprüche 8 bis 12, **dadurch gekennzeichnet, dass** Kennwerte der aktuellen Betriebsladezustände (SOC) der Batteriestränge (10) mittels eines in der zentralen Steuerungseinrichtung (12) eingerichteten Aktivierungsalgorithmus verarbeitet werden und dass der Aktivierungsalgorithmus eine Abfolge vorgibt, mit welcher der jeweilige Batteriestrang (10) automatisiert freigeschaltet wird.

14. Verfahren nach einem der Ansprüche 8 bis 13, **dadurch gekennzeichnet, dass** der zentralen Steuerungseinrichtung (12) ein Kennwert für eine zu befahrende Gleisstrecke, insbesondere eine durchschnittliche Steigung, vorgegeben wird und dass mittels der zentralen Steuerungseinrichtung (12) eine vom Kennwert abhängige Anzahl an Batteriesträngen (10) freigeschaltet wird.

15. Verfahren nach einem der Ansprüche 8 bis 14, **dadurch gekennzeichnet, dass** der Energiespeicher (8) während einer Bergabfahrt über den generatorisch betriebenen Elektromotor (7) aufgeladen wird.

## Claims

1. A rail vehicle (1) with a vehicle frame (2) supported on rail running gears (3), with an electric motor (7) as traction drive, and with an electrical energy storage (8) comprising a plurality of rechargeable battery cells (9) in battery stacks that can be connected in parallel, **characterized in that** a working device (5) adjustable by means of working drives (6) is arranged for carrying out a working operation on a railway track, that the battery cells (9) are arranged in a plurality of battery stacks (10) that can be connected in parallel in the way that each battery stack (10) can be activated by means of an assigned connecting module (11) to supply the electric motor (7), and that each connecting module (11) is coupled to a central control device (12) in order to activate the respective battery stack (10) in successive periods in a staged manner depending on a current operating variable, so that high depths of discharge (28) are achieved in the individual battery stacks (10) even with low energy consumption, which counteract ageing of the battery cells (9); with the maximum battery capacity and correspondingly high depths of discharge being used for different battery stacks during each period.

2. A rail vehicle (1) according to claim 1, **characterized in that** each battery cell (9) is designed as a lithium-ion cell, in particular with a positive electrode made of lithium titanate.

3. A rail vehicle (1) according to claim 1 or 2, **characterized in that** the electrical energy storage (8) comprises a battery management system by means of which a current operating state of charge (SOC) can be recorded for each battery stack (10), and that the respective operating state of charge (SOC) is fed to the central control device (12) as an operating variable.

4. A rail vehicle (1) according to claim 3, **characterized in that** a display unit (13) is arranged by means of which the operating state of charge (SOC) of the respective battery stack (10) can be displayed, and that an operating unit (14) is arranged by means of which the respective connecting module (11) can be actuated.

5. A rail vehicle (1) according to one of the claims 1 to 4, **characterized in that** an activation algorithm is set up in the control device (12) in order to activate the battery stacks (10) in a predefined sequence.

6. A rail vehicle (1) according to one of the claims 1 to 5, **characterized in that** the rail vehicle still comprises a traction converter (16), a transformer connection (20), and a pantograph (18); and that the electric motor (7) is coupled to the energy storage (8) via the traction converter (16), and that the traction converter (16) can be connected to an overhead contact line (19) via the transformer connection (20) and the pantograph (18).

7. A rail vehicle (1) according to one of the claims 1 to 6, **characterized in that** the rail vehicle comprises an internal combustion engine (22) and a generator (23) coupled to the internal combustion engine (22) to supply the electric motor (7) and/or an additional electric drive motor (24) of the rail vehicle.

8. A method for operating a rail vehicle (1) according to one of the claims 1 to 7, **characterized in that** the respective battery stack (10) is activated in successive periods by means of the central control device (12) depending on a current operating variable, so that high depths of discharge (28) are achieved in the individual battery stacks (10) even with low energy consumption, which counteract ageing of the battery cells (9); with the maximum battery capacity and correspondingly high depths of discharge being used for different battery stacks during each period.

9. A method according to claim 8, **characterized in that** a current operating state of charge (SOC) is recorded for each battery stack (10) by means of a battery management system, and that the operating states of charge (SOC) are transmitted to the central control device (12) as operating variables.

10. A method according to claim 8 or 9, **characterized in that** the operating state of charge (SOC) of the respective battery stack (10) is displayed by means of a display unit (13), and that the respective battery stack (10) is activated by means of an operating unit (14).

11. A method according to one of the claims 8 to 10, **characterized in that** during an ongoing operation of the rail vehicle (1) in a first phase, the electric motor (7) is supplied from a first battery stack (10) and the operating state of charge (SOC) of the assigned battery cells (9) is continuously compared with a threshold value, and that the electric motor (7) is supplied from another battery stack (10) once the threshold value is reached.

12. A method according to one of the claims 8 to 11, **characterized in that** an operating time is recorded for each battery stack (10), and that an activation sequence depending on the recorded operating times is specified for the battery stacks (10).

13. A method according to one of the claims 8 to 12, **characterized in that** characteristic values of the current operating states of charge (SOC) of the battery stacks (10) are processed by means of an activation algorithm set up in the central control device (12), and that the activation algorithm specifies a sequence with which the respective battery stack (10) is automatically activated.

14. A method according to one of the claims 8 to 13, **characterized in that** a characteristic value for a track section to be travelled, in particular an average uphill gradient, is specified to the central control device (12), and that a number of battery stacks (10) depending on the characteristic value is activated by means of the central control device (12).

15. A method according to one of the claims 8 to 14, **characterized in that** the energy storage (8) is charged during a downhill run via the generator-operated electric motor (7).

## Revendications

1. Véhicule ferroviaire (1) avec un châssis de véhicule (2) appuyé sur des mécanismes de roulement ferroviaires (3), avec un moteur électrique (7) en tant que système d'entraînement et avec un accumulateur d'énergie électrique (8) qui comprend plusieurs cellules de batterie rechargeables (9) dans des groupes de batteries commutables en parallèle, **caractérisé en ce qu'**un appareil de travail (5) pouvant être déplacé au moyen d'entraînements de travail (6) est disposé sur une emprise de la voie pour la réalisation d'une tâche, que les cellules de batterie (9) sont disposées dans plusieurs groupes de batteries commutables en parallèle (10) de telle sorte que chaque groupe de batteries (10) peut être activé au moyen d'un module de commutation associé (11) pour l'alimentation du moteur électrique (7) et que chaque module de commutation (11) est couplé à un dispositif de commande central (12) pour activer le groupe de batteries respectif (10) en fonction d'un paramètre actuel de manière échelonnée dans des périodes superposées afin que des profondeurs de cycle élevées (28) soient atteintes également en cas de faible consommation d'énergie dans les groupes de batteries individuels (10), lesquelles contrent un vieillissement des cellules de batterie (9) ; dans lequel la capacité de batterie maximale et des profondeurs de cycle élevées en conséquence pour différents groupes de batteries sont utilisées pendant chaque période.

2. Véhicule ferroviaire (1) selon la revendication 1, **caractérisé en ce que** chaque cellule de batterie (9) est réalisée en tant que cellule lithium-ions, notamment avec une électrode positive en titanate de lithium.

3. Véhicule ferroviaire (1) selon la revendication 1 ou 2, **caractérisé en ce que** l'accumulateur d'énergie électrique (8) comprend un système de gestion de batteries au moyen duquel un état de charge actuel (SOC) peut être détecté pour chaque groupe de batteries (10) et que l'état de charge respectif (SOC) est acheminé en tant que paramètre au dispositif de commande central (12).

4. Véhicule ferroviaire (1) selon la revendication 3, **caractérisé en ce qu'**un module d'affichage (13) est disposé, au moyen duquel l'état de charge (SOC) du groupe de batteries respectif (10) peut être affiché, et qu'un module de réglage (14) est disposé, au moyen duquel le module de commutation respectif (11) peut être commandé.

5. Véhicule ferroviaire (1) selon une des revendications 1 à 4, **caractérisé en ce qu'**un algorithme d'activation est configuré dans le dispositif de commande (12) pour activer les groupes de batteries (10) dans un ordre prédéfini.

6. Véhicule ferroviaire (1) selon une des revendications 1 à 5, **caractérisé en ce que** le véhicule ferroviaire comprend en outre un convertisseur de propulsion (16), un circuit de transformateur (20) et un pantographe (18) ; et que le moteur électrique (7) est couplé à l'accumulateur d'énergie (8) par le biais du convertisseur de propulsion (16) et que le convertisseur de propulsion (16) peut être commuté à une caténaire (19) par le biais du circuit de transformateur (20) et du pantographe (18).

7. Véhicule ferroviaire (1) selon une des revendications 1 à 6, **caractérisé en ce que** le véhicule ferroviaire comprend un moteur à combustion (22) et un générateur (23) couplé au moteur à combustion (22) pour l'alimentation du moteur électrique (7) et/ou d'un autre moteur d'entraînement électrique (24) du véhicule ferroviaire.

8. Procédé d'exploitation d'un véhicule ferroviaire (1) selon une des revendications 1 à 7, **caractérisé en ce que** le groupe de batteries respectif (10) est activé en fonction d'un paramètre actuel au moyen du dispositif de commande central (12) de manière échelonnée dans des périodes superposées afin que des profondeurs de cycle élevées (28) soient atteintes également en cas de faible consommation d'énergie dans les groupes de batteries individuels (10), lesquelles contrent un vieillissement des cellules de batterie (9) ; dans lequel la capacité de batterie maximale et des profondeurs de cycle élevées en conséquence pour différents groupes de batteries sont utilisées pendant chaque période.

9. Procédé selon la revendication 8, **caractérisé en ce qu'**un état de charge actuel (SOC) est détecté pour chaque groupe de batteries (10) au moyen d'un système de gestion de batteries et que les états de charge (SOC) sont transmis en tant que paramètres au dispositif de commande central (12).

10. Procédé selon la revendication 8 ou 9, **caractérisé en ce que** l'état de charge (SOC) du groupe de batteries respectif (10) est affiché au moyen d'un module d'affichage (13) et que le groupe de batteries respectif (10) est activé au moyen d'un module de réglage (14).

11. Procédé selon une des revendications 8 à 10, **caractérisé en ce que** le moteur électrique (7) est alimenté à partir d'un premier groupe de batteries (10) pendant un fonctionnement droit du véhicule ferroviaire (1) dans une première phase et l'état de charge (SOC) des cellules de batterie associées (9) est comparé ce faisant en continu à une valeur seuil, et que le moteur électrique (7) est alimenté à partir d'un autre groupe de batteries (10) à partir de l'atteinte de la valeur seuil.

12. Procédé selon une des revendications 8 à 11, **caractérisé en ce qu'**une durée de fonctionnement est détectée pour chaque groupe de batteries (10) et qu'une succession d'activation est prédéfinie en fonction des durées de fonctionnement détectées pour les groupes de batteries (10).

13. Procédé selon une des revendications 8 à 12, **caractérisé en ce que** des valeurs caractéristiques des états de charge actuels (SOC) des groupes de batteries (10) sont traitées au moyen d'un algorithme d'activation configuré dans le dispositif de commande central (12) et que l'algorithme d'activation prédéfinit un ordre avec lequel le groupe de batteries respectif (10) est activé de manière automatisée.

14. Procédé selon une des revendications 8 à 13, **caractérisé en ce qu'**une valeur caractéristique pour un parcours de voie à parcourir, notamment une rampe moyenne, est prédéfinie auprès du dispositif de commande central (12) et qu'un nombre de groupes de batteries (10) dépendant de la valeur caractéristique est activé au moyen du dispositif de commande central (12).

15. Procédé selon une des revendications 8 à 14, **caractérisé en ce que** l'accumulateur d'énergie (8) est rechargé par le biais du moteur électrique à fonctionnement générateur (7) pendant un parcours en descente.
